# Europäisches Patentamt

## European Patent Office

## Office européen des brevets

(19)

(11) Veröffentlichungsnummer: **0 284 121**
**B1**

(12) ## EUROPÄISCHE PATENTSCHRIFT

(45) Veröffentlichungstag der Patentschrift:
**14.03.90**

(51) Int. Cl.⁴: **C10K 1/16**, B01D 53/14

(21) Anmeldenummer: **88200314.8**

(22) Anmeldetag: **22.02.88**

(54) Verfahren zum Behandeln zweier beladener Waschlösungsströme.

(30) Priorität: **21.03.87 DE 3709363**

(43) Veröffentlichungstag der Anmeldung:
**28.09.88 Patentblatt 88/39**

(45) Bekanntmachung des Hinweises auf die Patenterteilung:
**14.03.90 Patentblatt 90/11**

(84) Benannte Vertragsstaaten:
**DE FR GB GR NL SE**

(56) Entgegenhaltungen:
**DE-A- 1 494 806**
**DE-A- 3 427 633**
**US-A- 3 710 546**

(73) Patentinhaber: **METALLGESELLSCHAFT AG,**
**Reuterweg 14 Postfach 3724, D-6000 Frankfurt/M.1(DE)**
Patentinhaber: **Linde Aktiengesellschaft,**
**D-8023 Höllriegelskreuth(DE)**

(72) Erfinder: **Grünewald, Gerhard, Ph.**
**Wasserbergstrasse 17, D-6500 Mainz-Gonsenheim(DE)**
Erfinder: **Alunic, Emil, Auf der Heide 6/13-1,**
**D-6242 Kronberg(DE)**

(74) Vertreter: **Rieger, Harald, Dr., Reuterweg 14,**
**D-6000 Frankfurt a.M.(DE)**

## Beschreibung

Die Erfindung betrifft ein Verfahren zum Behandeln zweier Waschlösungsströme, die aus verschiedenen Gaswaschzonen kommen und dort bei Drücken von 10 bis 100 bar durch physikalisches Lösen Kohlendioxid sowie mindestens eines der Wertgase Kohlenmonoxid, Wasserstoff oder Melthan aufgenommen haben.

Die Reinigung von Gasen durch physikalisch wirkende Waschlösungen, insbesondere die Entfernung von $H_2S$ und $CO_2$ aus diesen Gasen, ist seit langem bekannt. Verfahren dieser Art sind im deutschen Patent 1 494 806 und in den US-Patenten 3 531 917 und 3 710 546 beschrieben. Ebenfalls bekannt ist, die beladene Waschlösung durch Entspannen, Erhitzen oder Strippen sowie auch durch eine Kombination dieser Maßnahmen zu regenerieren. Als physikalisch wirkende Waschlösungen kommen z.B. Methanol oder N-Methyl-Pyrrolidon (NMP) in Frage. Die Gaswäschen arbeiten üblicherweise im Temperaturbereich von +60°C bis -80°C.

Bei der Gaswäsche nimmt die Waschlösung nicht nur Verunreinigungen sondern auch gewisse Mengen an Wertgasen, den Hauptkomponenten des zu waschendem Gases, auf. Der Erfindung liegt deshalb die Aufgabe zugrunde, diese Wertgase aus den aus den Gaswaschzonen kommenden Waschlösungsströmen möglichst vollständig wieder zurückzugewinnen. Erfindungsgemäß geschieht dies dadurch, daß man den ersten Waschlösungsstrom in eine erste Entspannungszone hinein mit einer Druckverminderung von mindestens 5 bar entspannt und dabei ein $CO_2$-reiches Entspannungsgas freisetzt, daß man den zweiten Waschlösungsstrom in eine Stoffaustauschelemente enthaltende zweite Entspannungszone hinein teilweise entspannt, daß man das Entspannungsgas aus der ersten Entspannungszone im Gegenstrom zum zweiten Waschlösungsstrom aufwärts durch die zweite Entspannungszone leitet, am Kopf der zweiten Entspannungszone ein $CO_2$ und mindestens ein Wertgas enthaltendes Gasgemisch abzieht, und daß man die beiden Waschlösungsströme aus den Entspannungszonen regeneriert.

Das Verfahren der Erfindung findet vor allem dann Anwendung, wenn die beiden Waschlösungsströme, die aus den Gaswäscen kommen, $CO_2$ in unterschiedlicher Konzentration enthalten. Ein hoher $CO_2$-Gehalt der beladenen ersten Waschlösung führt in der ersten Entspannungszone dazu, daß dort mit dem freigesetzten $CO_2$ auch ein hoher Anteil der Anteil der mitgeführten Wertgase in das Entspannungsgas übergeht. In der zweiten Entspannungzone, wo der $CO_2$-ärmere zweite Waschlösungsstrom selbst nur relativ wenig $CO_2$ einbringt, bewirkt das Entspannungsgas aus der ersten Entspannungszone einen starken Strippeffekt, durch den die Wertgase aus der zweiten Waschlösung ausgetrieben werden. Gleichzeitig wird in erwünschter Weise ein ganz erheblicher Teil des im Entspannungsgas der ersten Entspannungszone ethaltenen $CO_2$ in der zweiten Entspannungszone wieder absorbiert. Das am Kopf der zweiten Entspannungszone abgezogene Gasgemisch ist dadurch reich an

den Wertgasen, die man durch Einleiten des Gasgemisches in eine der Gaswaschzonen zurückgewinnt. Dieses Zurückgewinnen der Wertgase ist auch für die Regenerierung der Waschlösungsströme vorteilhaft, da die Wertgase ansonsten in den Regenerationsabgasen störend erscheinen würden. Man kann das abgezogene Gasgemisch auch anderweitig verwenden, z.B. als Heizgas.

Man kann die beiden Entspannungszonen auch übereinander anordnen und dabei den aus der zweiten Zone ablaufenden zweiten Waschlösungsstrom in die erste Zone einleiten.

Es ist zweckmäßig, den ersten Waschlösungsstrom in der ersten Entspannungszone auf das 0,5- bis 1,2-fache des Partialdrucks des $CO_2$ im Gas am Eintritt in die erste Gaswaschzone zu entspannen. Dadurch läßt sich die gewünschte $CO_2$-Menge im Entspannungsgas einstellen, wobei man berücksichtigt, wieviel $CO_2$ in der zweiten Entspannungszone absorbiert werden soll. Auf diese Weise liegt der Druck in den beiden Entspannungszonen etwa bei 5 bis 25 bar.

Das der ersten Gaswaschzone aufgegebene erste Gas kann sich von dem der zweiten Gaswaschzone aufgegebenen zweiten Gas zumindest bezüglich des $CO_2$-Gehaltes unterscheiden. Der $CO_2$-Anteil im ersten Gas ist zumeist mindestens 1,5-mal so hoch wie im zweiten Gas. Als Beispiel kann gesagt werden, daß der $CO_2$-Gehalt des ersten Gases etwa im Bereich von 20 bis 40 Vol. % liegt und der $CO_2$-Gehalt des zweiten Gases etwa 2 bis 15 Vol.% beträgt. Als erstes Gas kommt z.B. ein konvertiertes Wassergas in Frage und beim zweiten Gas kann es sich um ein nicht konvertiertes Wassergas handeln. Das Wassergas enthält als Hauptkomponenten Wasserstoff und Kohlenoxide, wobei durch die Konvertierungsreaktion ($CO + H_2O = CO_2 + H_2$) das CO ganz oder weitgehend entfernt ist. Anstelle von Wassergas kann es sich beim ersten und zweiten Gas auch um Synthesegase oder methanreiche Gase handeln.

Für die beiden Gaswäschen verwendet man die bekannten physikalisch wirkenden Lösungsmittel, insbesondere Methanol und NMP. Dabei liegen die Temperaturen in den Waschzonen im Bwereich von +60°C bis -80°C.

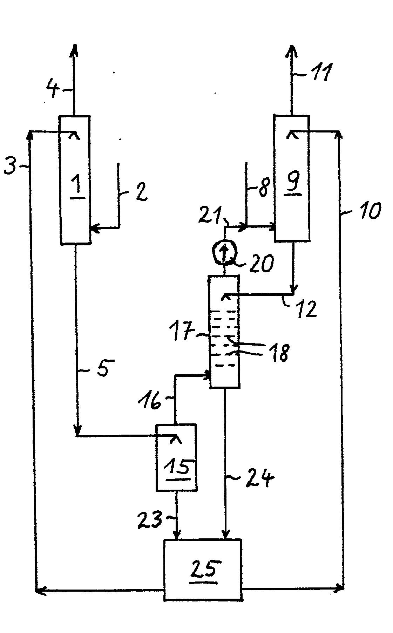

Ausgestaltungsmöglichkeiten des Verfahrens werden mit Hilfe der Zeichnung erläutert.

Der ersten Gaswaschzone (1) führt man durch die Leitung (2) das zu reinigende erste Gas zu, welches einen relativ hohen $CO_2$-Gehalt aufweisen kann. Regenerierte Waschlösung kommt aus der Leitung (3) und das gereinigte Gas zieht in der Leitung (4) ab. Der erste Waschlösungsstrom verläßt die erste Gaswaschzone (1) in der Leitung (5). In analoger Weise wird das zweite Gas in der Leitung (8) der zweiten Gaswaschzone (9) aufgegeben, welcher man durch die Leitung (10) regenerierte Waschlösung aufgibt. Das gewaschene zweite Gas verläßt die zweite Gaswaschzone (9) durch die Leitung (11) und der beladene zweite Gaswaschstrom wird in der Leitung (12) abgeführt.

Das erste Gas in der Leitung (2) enthält in den meisten Fällen mindestens 1,5-mal so viel $CO_2$ wie das zweite Gas in der Leitung (8). In den beiden Gaswaschzonen (1) und (9) befinden sich zur Intensivierung des Gas-Flüssigkeits-Stoffaustausches an sich bekannte Böden oder Füllkörper, die zur Vereinfachung nicht dargestellt sind.

Der erste Waschlösungsstrom in der Leitung (5) wird in die erste Entspannungszone (15) geleitet, wo sein Druck um mindestens 5 bar vermindert wird. Die Entspannungszone (15) kann als leerer Behälter ausgebildet sein. Das Entspannungsgas der ersten Entspannungszone (15) führt man in der Leitung (16) zur zweiten Entspannungszone (17), die Stoffaustauschelemente (18) enthält. In den Kopfbereich der zweiten Entspannungszone (17) wird durch die Leitung (12) der zweite Waschlösungsstrom zugeführt und teilweise entspannt. Die Drücke in den beiden Entspannungszonen (15) und (17) sind üblicherweise etwa gleich, sie liegen im Bereich von 5 bis 25 bar.

Das in der zweiten Entspannungszone (17) im Gegenstrom zur zweiten Waschlösung aufwärts strömende Entspannungsgas aus der Leitung (16) bewirkt dort einen erheblichen Strippeffekt, wobei die Wertgase freigesetzt werden. Ein erheblicher Teil des im Entspannungsgas der Leitung (16) enthaltenen $CO_2$ wird durch die zweite Waschlösung wieder absorbiert und erscheint deshalb nicht im Kopfgas der zweiten Entspannungszone. Dieses Kopfgas, ein Wertgase und $CO_2$ enthaltendes Gasgemisch, wird durch den Verdichter (20) und die Leitung (21) über die Leitung (8) der zweiten Gaswaschzone (9) zugeführt. Die auf diese Weise zurückgeführten Wertgase finden sich zum größten Teil im Reingas der Leitung (11) wieder.

Die beiden Waschlösungsströme der Entspannungszonen (15) und (17) werden durch die Leitungen (23) und (24) einer üblichen Regenerierung (25) zugeführt. Hierbei werden die Beladungen der Waschlösungen durch mindestens eine der Maßnahmen Entspannen, Strippen oder Erhitzen entfernt; regenerierte Waschlösung wird in den Leitungen (3) und (10) zur bereits beschriebenen Wiederverwendung zurückgeführt.

## BEISPIEL

In einer der Zeichnung entsprechenden Verfahrensführung werden in den beiden Gaswaschzonen (1) und (9) bei etwa 37 bar ein erstes und ein zweites Gas mit Methanol gewaschen. Die Zusammensetzung der beiden Gase ist folgende:

|  | erstes Gas | zweites Gas |
|---|---|---|
| CO (Mol-%) | 3 | 49 |
| $H_2$ (Mol-%) | 58 | 34 |
| $CO_2$ (Mol-%) | 39 | 17 |

Pro Stunde werden der ersten Waschzone (1) 66 m³ und der zweiten Waschzone (9) 81 m³ Waschlösung aufgegeben. Die Waschlösungsströme in den Leitungen (5,12,23,24) führen pro Stunde folgende Gesamtbelandungen mit sich, wobei $H_2$ und CO Wertgase sind:

| Leitung | 5 | 12 | 23 | 24 |
|---|---|---|---|---|
| $CO_2$ (kMol) | 351 | 192 | 310 | 222 |
| $H_2$ (kMol) | 8,03 | 4,2 | 0,6 | 1,7 |
| CO (kMol) | 0,71 | 13,4 | 0,09 | 1,3 |

Bezogen auf den m³ Waschlösung sind das in den Leitungen (5) und (12) pro Stunde:

|  | Leitung (5) | Leitung (12) |
|---|---|---|
| $CO_2$ (Mol/m³) | 5318 | 2370 |
| $H_2$ (Mol/m³) | 122 | 52 |
| CO (Mol/m³) | 11 | 165 |

Der Druck in den beiden Entspannungszonen liegt bei etwa 11 bar.

In der Wertgas-Rückführleitung (21) findet man die in der nachfolgenden Tabelle in Spalte A angegebenen Gase. Zum Vergleich gibt die Spalte B die Summe der Gasmengen in den Leitungen (16) und (21) an, wenn man das Entspannungsgas in der Leitung (16) nicht in die zweite Entspannungszone (17) leiten sondern getrennt halten würde:

|  | A | B |
|---|---|---|
| $CO_2$ (kMol/h) | 11,6 | 47,4 |
| $CO+H_2$ (kMol/h) | 22,6 | 20,1 |

Im Fall A beträgt die CO-Restmenge in den der Regenerierung zugeführten Waschlösungsströmen insgesamt pro Stunde 1,51 kMol und im Fall B 4,79 kMol. Man sieht aus der Tabelle, daß die Summe der Gasmengen bei der erfindungsgemäßen Verfahrensführung (Spalte A) klein ist, so daß zum Rückführen der Gase nur wenig Kompressionsaufwand nötig ist. Gleichzeitig wird eine größere Menge an Wertgasen, $CO + H_2$, zurückgewonnen.

## Patentansprüche

1. Verfahren zum Behandeln zweier Waschlösungsströme, die aus verschiedenen Gaswaschzonen kommen und dort bei Drücken von 10 bis 100 bar durch physikalisches Lösen Kohlendioxid sowie mindestens eines der Wertgase Kohlenmonoxid, Wasserstoff oder Methan aufgenommen haben, dadurch gekennzeichnet, daß man den ersten Waschlösungsstrom in eine erste Entspannungszone hinein mit einer Druckverminderung von mindestens 5 bar entspannt und dabei ein $CO_2$-reiches Entspannungsgas freisetzt, daß man den zweiten Waschlösungsstrom in eine Stoffaustauschelemente enthaltende zweite Entspannungszone hinein teilweise entspannt, daß man das Entspannungsgas aus der ersten Entspannungszone im Gegenstrom zum zweiten Waschlösungsstrom aufwärts durch die zweite Entspannungszone leitet, am Kopf der zweiten Entspannungszone ein $CO_2$ und minde-

stens ein Wertgas enthaltendes Gasgemisch abzieht, und daß man die beiden Waschlösungsströme aus den Entspannungszonen regeneriert.

2. Verfahren nach Anspruch 1, dadurch gekennzeichnet, daß man den aus der zweiten Entspannungszone ablaufenden zweiten Waschlösungsstrom in die erste Entspannungszone leitet.

3. Verfahren nach Anspruch 1 oder 2, dadurch gekennzeichnet, daß man das am Kopf der zweiten Entspannungszone abgezogene Gasgemisch in eine Gaswaschzone leitet.

4. Verfahren nach Anspruch 1 oder einem der folgenden, dadurch gekennzeichnet, daß der Druck in den beiden Entspannungszonen etwa 5 bis 25 bar beträgt.

**Claims**

1. Process for treating two streams of washing solution which come from different gas-scrubbing zones and have absorbed carbon dioxide and at least one of the valuable gases carbon monoxide, hydrogen or methane therein by physical dissolving at pressures of 10 to 100 bar, characterised in that the first stream of washing solution is subjected to pressure relief into a first pressure relief zone with a pressure reduction of at least 5 bar and thereby a $CO_2$-rich flashed-off gas is released, that the second stream of washing solution undergoes partial pressure relief into a second pressure relief zone containing exchange-promoting elements, that the flashed-off gas from the first pressure relief zone is passed upwards through the second pressure relief zone in a counter-stream to the second stream of washing solution, a gas mixture containing $CO_2$ and at least one valuable gas is withdrawn from the head of the second pressure relief zone, and that the two streams of washing solution from the pressure relief zones are regenerated.

2. Process according to claim 1, characterised in that the second stream of washing solution leaving the second pressure relief zone is passed into the first pressure relief zone.

3. Process according to claim 1 or 2, characterised in that the gas mixture which is withdrawn from the head of the second pressure relief zone is passed into a gas scrubbing zone.

4. Process according to claim 1 or one of the following claims, characterised in that the pressure in the two pressure relief zones is about 5 to 25 bar.

**Revendications**

1. Procédé de traitement de deux courants de solution de lavage, qui proviennent de zones différentes de lavage de gaz et qui y ont absorbé, sous des pressions de 10 à 100 bar, par dissolution physique, du dioxyde de carbone, ainsi qu'au moins l'un des gaz utiles que sont le monoxyde de carbone, l'hydrogène ou le méthane, caractérisé en ce qu'il consiste à détendre le premier courant de solution de lavage dans une première zone de détente en abaissant la pression d'au moins 5 bar et en libérant ainsi un gaz de détente riche en $CO_2$, à détendre partiellement le second courant de solution de lavage dans une seconde zone de détente contenant des éléments d'échange de matière, à envoyer le gaz de détente, provenant de la première zone de détente à contre-courant du second courant de solution de lavage et en un mouvement ascendant, dans la seconde zone de détente, à soutirer en tête de la seconde zone de détente un mélange gazeux contenant du $CO_2$ et au moins un gaz utile et à régénérer les deux courants de solution de lavage provenant des zones de détente.

2. Procédé suivant la revendication 1, caractérisé en ce qu'il consiste à envoyer à la première zone de détente le second courant de solution de lavage sortant de la seconde zone de détente.

3. Procédé suivant la revendication 1 ou 2, caractérisé en ce qu'il consiste à envoyer à une zone de lavage de gaz le mélange gazeux soutiré en tête de la seconde zone de détente.

4. Procédé suivant la revendication 1 ou l'une des suivantes, caractérisé en ce que la pression dans les deux zones de détente est comprise entre 5 et 25 bar environ.